# EUROPEAN PATENT APPLICATION

(11) **EP 0 968 929 A1**
(43) Date of publication of application: **05.01.2000**
(21) Application number: 99112816.6
(22) Date of filing: 02.07.1999
(51) Int. Cl.: B65D 65/14, B65D 65/40, B65D 75/58

(54) **Wrapping materials**

(30) Priority: 03.07.1998 GB 9814409; 11.12.1998 GB 9827175
(71) Applicant: CARRS PAPER LIMITED, Solihull West Midlands B90 4LJ (GB)
(72) Inventor: Bond, Michael Peter, nr. Rugby, Warwickshire CV23 8RY (GB)
(74) Representative: Harrison, Gordon Donald

(57) **Abstract**

Wrapping material (12, 12a, 32) of the kind comprising a layer of a corrugated sheet material (15, 35) and a further layer of a flexible sheet material (14, 34) bonded together to form a composite material, the corrugated sheet material (15, 35) having on its exposed face a coating of cohesive adhesive material (A) such that when two portions of the corrugated sheet material are brought into contact they adhere to one-another, is provided with at least one line of weakness (16, 16a, 39) formed in the material to extend along the length of the material in a direction transverse to the corrugations, so as to establish a line along which the material may be torn to facilitate opening of a package formed from the composite material. The line of weakness may comprise a gap (16, 16c) in the corrugated layer (15, 35), or a score line, or a line of slits (39) or perforations formed at least in the corrugated layer. The cohesive coating (A) may be formed with a gap (36) in which the line of weakness (39) is located. Alternatively, a masking strip (55) may be used to cover part of the coating. Preferably there are two lines of weakness within the gap in the coating or adjacent to the masking strip so as to form a tear strip (40).

## Description

This invention relates to wrapping materials of the kind comprising a layer of a corrugated sheet material and a further layer of a flexible sheet material bonded together to form a composite material, the corrugated sheet material having on its exposed face a coating of cohesive adhesive material such that when two portions of the corrugated sheet material are brought into contact they adhere to one-another. Typically, the layers of the composite material may be bonded to one another by adhesives such as starch, polyvinyl acetate, sodium silicate and/or blends thereof. Typically, the further layer comprises a flat sheet material, but it may alternatively comprise a creped sheet and/or a creped/flat laminant.

Since the material is more flexible about lines parallel to the corrugations than about lines transverse thereto, it is formed into rolls centred on an axis parallel to the corrugations, and in the roll as supplied to the user the corrugations extend across the width of the material. Alternatively, the material can be supplied in flat sheet form.

Such wrapping materials are commonly used to enclose and protect a wide range of articles by folding the material around the article, with the layer of corrugated sheet material innermost and bringing edge portions of the material into face-to-face contact so that the cohesive material binds the edge portions together to form a package in which the article is enclosed. In an alternative arrangement, two separate sheets of the material may be applied to the article so that peripheral margins of the two sheets are brought together around the article to form the package.

However, it can be difficult to open such a package. The material used is normally resistant to disruption in order to provide adequate protection for the enclosed article, and it may be difficult to penetrate between the sealed portions of the package to begin the separation thereof.

Whilst it is possible to incorporate tear strips into the packaging material, this is always possible because the position of such tear strips cannot easily be related to the dimensions of the article to be packed, and in practice even after the tear strip has been disrupted the cohesive material on either side thereof may still remain in contact. Additionally, the provision of a tear strip may introduce non-recyclable/re-pulpable constituents, which is considered undesirable in packaging materials.

It is accordingly an object of the present invention to provide such a packaging material having an improved arrangement for facilitating the opening of a package formed therefrom.

According to one aspect of the present invention we provide wrapping material of the kind comprising a layer of a corrugated sheet material and a further layer of a flexible sheet material bonded together to form a composite material, the corrugated sheet material having on its exposed face a coating of cohesive adhesive material such that when two portions of the corrugated sheet material are brought into contact they adhere to one-another, wherein at least one line of weakness is formed in the material to extend along the length of the material in a direction transverse to the corrugations, whereby the material may be torn along said line of weakness to facilitate opening of a package formed from the composite material.

The line of weakness is preferably formed as a discontinuity in the layer of corrugated material.

In one embodiment of the invention such discontinuity may be formed as a gap in the corrugated layer of the composite material. Such gap may be formed by wholly or partially removing a strip of the corrugated material, but preferably separate pieces of corrugated material are secured to the further layer with a spacing corresponding to the required gap.

In a second embodiment of the invention the line of weakness may be formed by scoring the corrugated material in a generally conventional manner to form a slit to extend through part of the thickness of the corrugated material, substantially without removing any of the material, or preferably by forming a line of slits or perforations extending through the entire thickness of the corrugated material.

In this embodiment, preferably in accordance with a further feature of the invention, the coating of cohesive material is formed with an interruption in the region of said line of weakness. The provision of such an interruption in the cohesive coating facilitates separation of the adhered portions of the material in the formed package. The interruption may be formed either by a physical gap in the coating, or by masking the coating in some suitable manner.

According to a second aspect of the present invention we provide a wrapping material of the kind comprising a layer of a corrugated sheet material and a further layer of a flexible sheet material bonded together to form a composite material, the corrugated layer having on its exposed face a coating of cohesive adhesive material such that when two portions of the corrugated layer are brought into contact they adhere to one-another, wherein there is a gap in said coating, which gap extends along the length of the material in a direction transverse to the corrugations, and at least one line of weakness is formed in the material within said gap to extend along said gap and thereby to facilitate opening of a package formed from the composite material by tearing of the material along said line of weakness.

According to a further aspect of the present invention we provide a wrapping material of the kind comprising a layer of a corrugated sheet material and a further layer of a flexible sheet material bonded together to form a composite material, the corrugated layer having on its exposed face a coating of cohesive adhesive material such that when two portions of the corrugated layer are brought into contact they adhere to one-another, wherein at least one line of weakness is formed in the material to extend along the length of the material in a direction transverse to the corrugations and thereby to facilitate opening of a package formed from the composite material by tearing of the material along said line of weakness, and wherein said coating is masked by a covering which extends along the length of the material in the region of said line of weakness so as to prevent the corrugated layer adhering in the vicinity of the line of weakness.

The covering may comprise a strip of material coated with said cohesive material on one face only so as to adhere to the corrugated layer, but preferably it is formed from a composite material similar to that from which the wrapping material itself is formed, namely comprising a layer of a corrugated sheet material and a further layer of a flexible sheet material bonded together to form a composite material, the corrugated sheet material having on its exposed face a coating of cohesive adhesive material, and such skips are then secured on to the wrapping material by bringing the face of the corrugated material of the strip that is coated with the cohesive material into contact with the corrugated layer of the wrapping material, and preferably arranged such that the corrugations mesh.

In either case, there are preferably two lines of weakness arranged in pairs spaced apart in the direction of the length of the corrugations, comprising two parallel rows of such perforations or slits which, in combination define a tear strip, that is to say a narrow band of material that is readily detachable from the sheet of composite material so as to divide it into two separate pieces thereby facilitating removal of the wrapping material from the wrapped article when required.

The interruption in the coating facilitates separation of the cohered layers of corrugated material, and is particularly desirable where the line of weakness is adapted as described above to serve as a tear strip.

In accordance with a further feature of the invention, the further layer of the composite material may additionally be provided with a line of weakness in the region of the line of weakness in the corrugated layer. In particular, a score line or a line of perforations may be formed in the further layer to extend along the gap in the corrugated layer in the case of the first embodiment or substantially in register with the score line or the line of slits or perforations in the case of the second embodiment.

Most conveniently, in order to simplify production, the line of weakness is formed by at least one row of perforations or spaced slits which extend through the entire thickness of both layers of the laminated material.

Whatever its form, the line of weakness may be provided at a predetermined spacing from one or both longitudinal edges of the wrapping material, and it will be understood that the spacing between the lines of weakness can be related to the size of the article to be wrapped.

However, it is possible to form additional lines of weakness at intervals across the width of the material. In this way the material can be used for the packaging a range of articles of different widths whilst providing at least one line of weakness that is appropriately located. Also, such material may be cut longitudinally into narrower pieces for wrapping smaller articles whilst still providing at least one line of weakness to facilitate opening of the package.

The composite material may include one or more additional layers of the corrugated material if greater cushioning is required, and in this case a line of weakness may be required in each additional layer.

However, in accordance with a further feature of the invention, additional reinforcement may alternatively be provided by means of one or more strips of material secured in face-to-face relationship with the corrugated layer and extending in a direction transverse to the corrugations. It will be understood that such reinforcement strips or strips will be arranged so as not to coincide with the line or lines of weakness whereby opening of the package is facilitated.

Such reinforcement strips are preferably formed from a composite material similar to that from which the wrapping material itself is formed, namely comprising a layer of a corrugated sheet material and a further layer of a flexible sheet material bonded together to form a composite material, the corrugated sheet material having on its exposed face a coating of cohesive adhesive material, and such strips are then secured on to the wrapping material by bringing the face of the corrugated material of the strip that is coated with the cohesive material into contact with the corrugated layer of the wrapping material, and preferably arranged such that the corrugations mesh.

In this way local reinforcement is provided without increasing the bulkiness of the packaging. If the both layers of the reinforcement strip are coated with said cohesive material, portions of the strips that are brought together when the wrapping material is folded around the article being packaged will adhere to one-another in the same way as the corrugated layer of the wrapping material so that the adhesion of the edge portions of the package is not reduced. However, generally it is envisaged that, unless the reinforcement strips are required to be particularly wide, it will not be necessary for them to be coated with the cohesive material on both sides.

According to a further aspect of the invention we provide a method of wrapping articles by using wrapping material in accordance with the previously described aspects of the invention, comprising the steps of ranging two portions of said material with the corrugated layer in juxtaposition with said article, and bringing said corrugated layers into face-to-face contact around the periphery of the article so as to become adhered to one-another, with said line of weakness extending across the package thus formed and at least partly in a region where the corrugated layers are in contact.

The two portions of the material may comprise two spaced portions of a single piece of the material which is folded around the article, or two separate pieces of the material.

These and other features of the invention will now be described by way of example with reference to the accompanying drawings, wherein
FIGURE 1 is a perspective view of a roll of a first embodiment of wrapping material provided with lines of weakness formed as narrow gaps in the corrugated layer, and a length of such material cut therefrom ready for use,
FIGURE 2 is a perspective view of the cut length of the material after folding around an article but before being sealed at the longitudinal edges,
FIGURE 3 is a plan view corresponding to Figure 2 showing the formed package,
FIGURE 4 is a plan view showing a cut-length of a modification of the first embodiment of the wrapping material;
FIGURE 5 is a perspective view of a roll of a second embodiment of wrapping material provided with two lines of weakness formed as a tear strip disposed in a gap in the cohesive coating of the corrugated material, and a length of such material cut therefrom ready for use,
FIGURE 6 is a perspective view similar to Figure 2, of the cut length of the material after folding around an article to form a package, but before being sealed at the longitudinal edges,
FIGURE 7 is a plan view corresponding to Figure 2 showing the formed package after sealing at the edges,
FIGURE 8 is a perspective view, similar to Figure 2, showing an alternative form of package using two separate sheets of the second embodiment of wrapping material, after folding around an article but before being sealed at both longitudinal edges,
FIGURE 9 is a perspective view of a cut-length of a modification of the second embodiment of wrapping material in which the cohesive coating is continuous and a masking strip is located between the lines of weakness,
FIGURE 10 is a perspective view of a further modification of the first embodiment to include reinforcement strips alongside the lines of weakness, and
FIGURE 11 is a perspective view of a further modification of the second embodiment to include reinforcement strips.

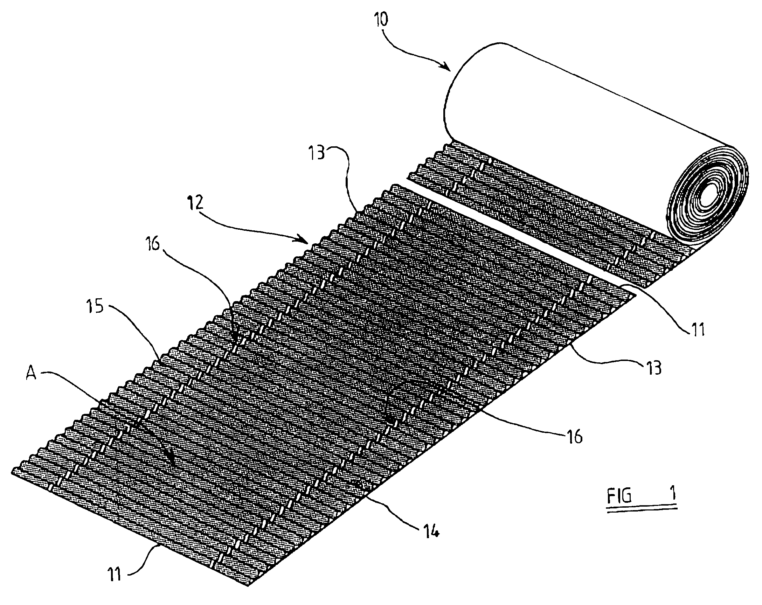

Referring firstly to Figure 1, a first embodiment of corrugated wrapping material in accordance with the invention is shown in the form of a roll 10, from which the material is drawn off and cut transversely to form a length 12 having cut end edges 11 and lateral edges 13. The material in this embodiment comprises a base layer 14 of a flexible material, which may be a flat material, a creped sheet or a creped/flat laminant, adhesively bonded to a layer 15 of corrugated material. As can be seen, the corrugations in the layer 15 extend transversely across the width of the material in the roll 10. To enable the material to form a package as hereinafter described, the corrugated layer 15 is coated across its entire width with cohesive material indicated by shading A on the free opposite to that at which it is secured to the base layer 14, that is the upper face as shown in Figure 1.

In accordance with the invention, lines of weakness are formed in at least the corrugated layer 15 along the length thereof spaced from and parallel to the lateral edges 13 and transverse to the corrugations. In the embodiment shown in Figure 1, there are two such lines of weakness, but there may be only one, or a greater number. Whilst the lines of weakness may be formed by scoring the layer 15 of corrugated material or by a line of intermittent cuts or perforations in the corrugated material, in this embodiment they are formed by narrow gaps 16 in the corrugated layer 15.

The gaps 16 are most conveniently formed by securing separate lengths of the corrugated material to the base layer 14 with the required gap between each length. However it would alternatively be possible to remove strips of appropriate width from a full-width corrugated layer 15 subsequent to its attachment to the base layer 14, and in this case the depth of the removed strip could in some cases be less than the full depth of the corrugated material.

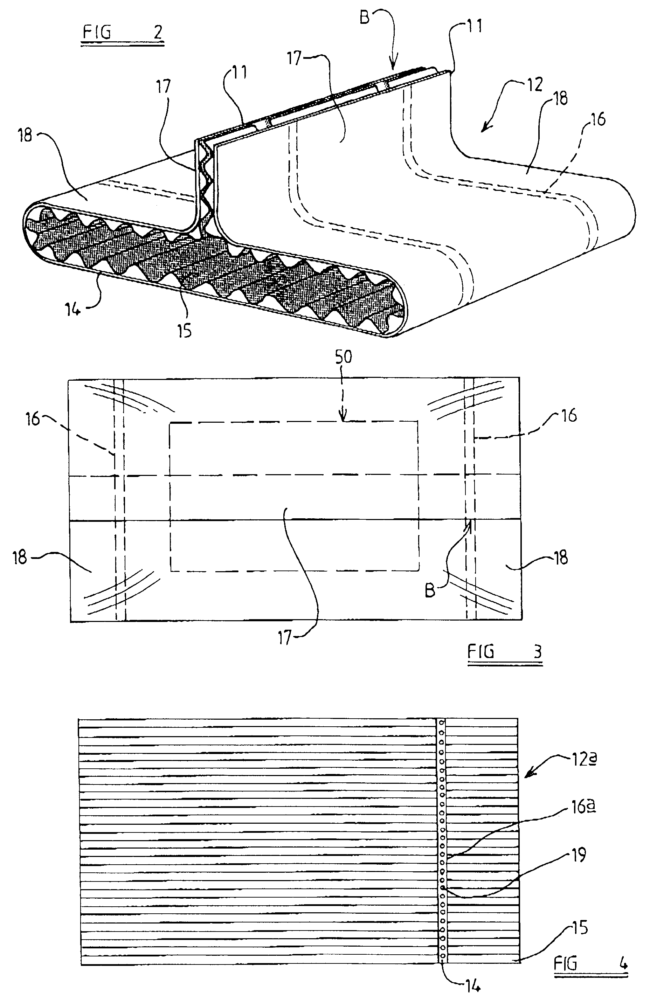

In use, the cut-length 12 can be folded around an article 50 as shown in Figures 2 and 3 so that marginal end portions 17 adjacent the cut end edges 11 are brought together and the corresponding end portions of the corrugated layer 15 are brought into contact and adhere together, preferably with the corrugations nesting together in order to maximise the area of contact. Longitudinal marginal edge portions 18 are then compressed to bring further portions of the corrugated layer along the edges of the package together so as to form a substantially continuous seal around the article 50. The adhered end portions 17 may then be folded downwardly so as to lay flat on the package as shown in Figure 3.

It will be seen that the gaps 16 in the corrugated layer 15 extend along the lateral edge portions 18 of the package in the regions where they are adhered to one another, and because in the gaps 16 the material consists only of the base layer 14 the wrapping material can fairly easily be torn apart along the line of one or both gaps, preferably by initiating a tear at the exposed end edges, as indicated by the arrow B.

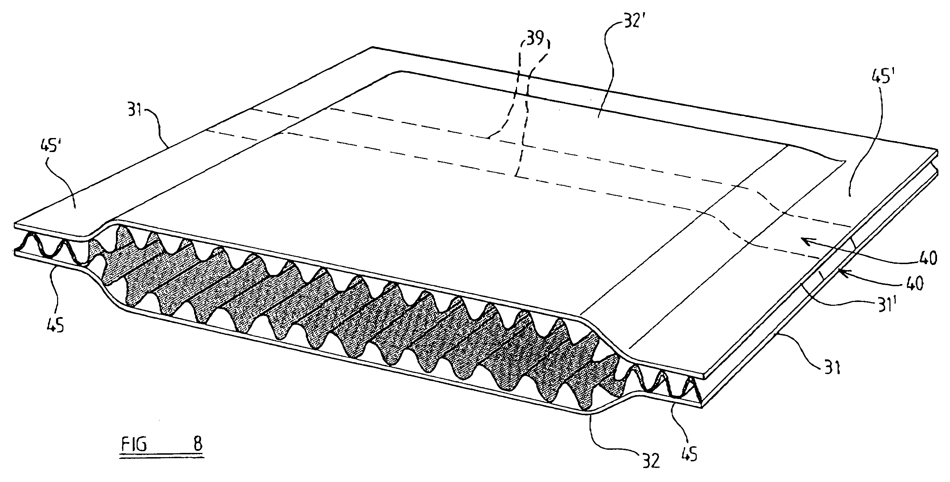

Instead of using a single piece of the wrapping material folded around the article, it will be appreciated that it is possible to use two separate pieces in the manner subsequently described with reference to Figure 8.

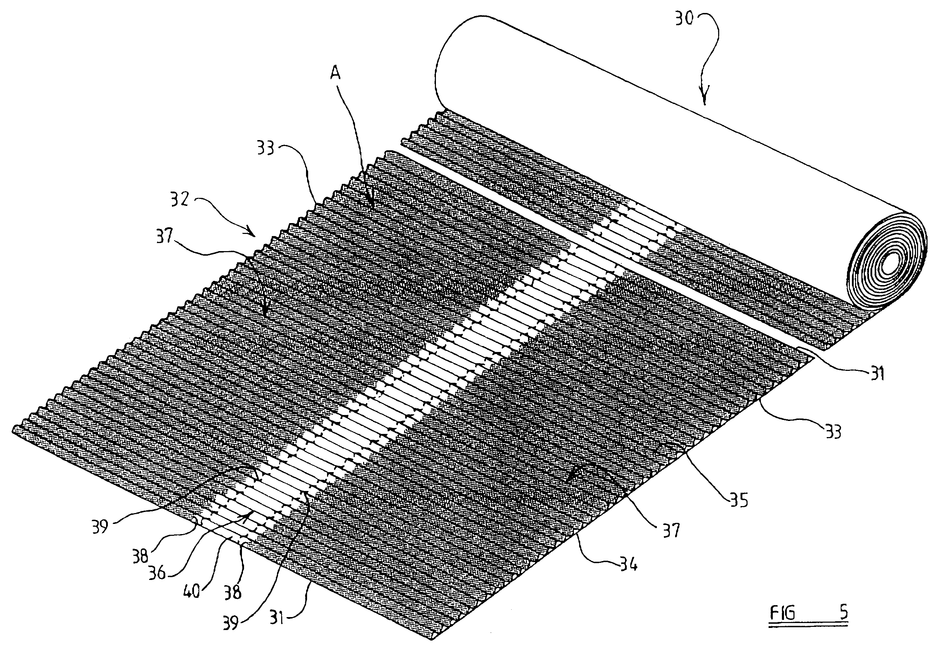

Figure 4 shows length 12a of a modified wrapping material in which there is a single gap 16a in the corrugated layer 15, and in which the base layer 14 is additionally formed with a line of perforations 19 running along the gap 16a so as further to facilitate the tearing of the wrapping material when it is required to open the package. In a further modification the gap may be relatively wider and there may be two lines of perforations or slits adjacent to the edges of the gap so as to define between them a separable tear strip similar to that hereinafter described with reference to Figure 5.

Referring now to Figure 5, a second embodiment of corrugated wrapping material in accordance with the invention is shown in the form of a roll 30, from which the material is drawn off and cut transversely to form a sheet 32 having cut end edges 31 and lateral edges 33.

The material in this embodiment, like that of the first embodiment, comprises a base layer 34 of a flexible material, which may be a flat material, a creped sheet or a creped/flat laminant, which is itself adhesively bonded to a layer 35 of corrugated material. As can be seen, the corrugations in the layer 35 extend transversely across the width of the material in the roll 30. To enable the material to form a package as hereinafter described, the corrugated layer 15 has coating of cohesive material A on the face opposite to that at which it is secured to the base layer 34.

In this embodiment, the coating A does not extend across the full width of the corrugated material, but there is an uncoated central strip 36 in which there is a gap in the coating. The coating is deposited in two longitudinally extending areas 37 having outer edges co-incident with the lateral edges 33 and inner edges 38 which define between them the central uncoated strip 36.

Within the central uncoated strip 36, a pair of parallel lines of weakness are formed in at least the corrugated layer 35 along the length thereof transverse to the corrugations, at positions spaced slightly inwardly from the inner edges 38 of the coated areas 37.

In the embodiment shown in Figure 5, the lines of weakness are formed as rows of short longitudinally spaced slits 39, which preferably extend through the full thickness of the corrugated layer 35 and at least partially through the thickness of the material of the base layer 34, so that the composite material can readily be disrupted along such lines.

Thus the strip 40 of material between the rows of slits 39 serves as a tear strip which can be separated from the remainder of the sheet 32 to divide it into two portions. It will be seen that the tear strip 40 defined by the slits 39 in this embodiment extends centrally relative to the lateral edges 33, but this need not be the case. Indeed, there may be two or more parallel tear strips 40, each formed in the same way, thereby allowing the material to be severed longitudinally between such tear strips into a plurality of separate lengths suitable for wrapping articles of various widths for example.

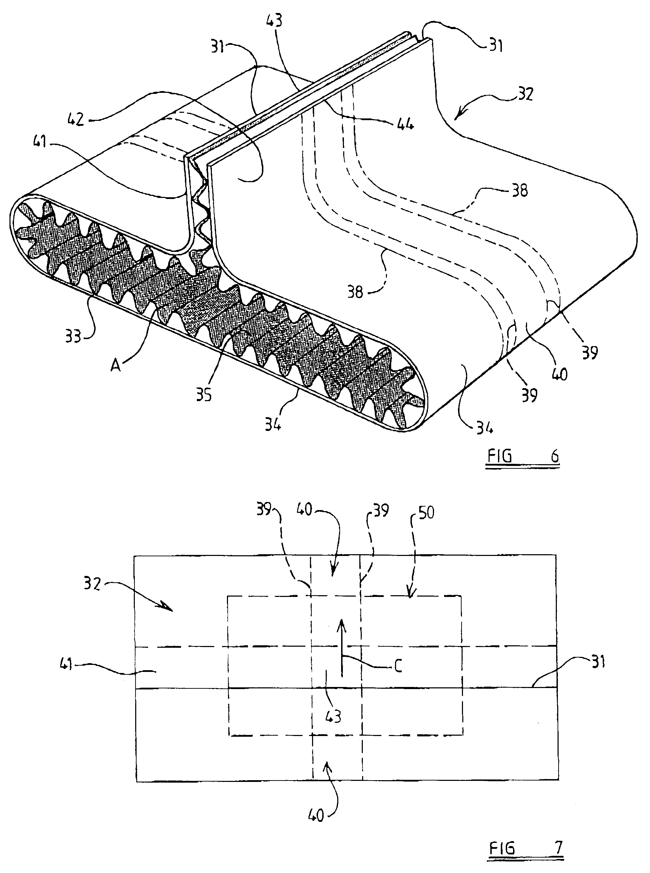

In use, the cut sheet 32 is folded around an article 50 as shown in Figure 6 and end portions 41, 42 of the sheet adjacent to the cut end edges 31 are brought together so that the corresponding end portions of the coated face of the corrugated layer 35 are brought into contact and adhere together, preferably with the corrugations nesting together in order to maximise the area of contact. Longitudinal edge portions of the sheet adjacent to the lateral edges 33 are then compressed to bring further portions of the corrugated layer along the edges of the package together so as to form a substantially continuous seal around the article 50. The adhered end portions may then be folded downwardly so as to lay flat as shown in Figure 7.

Because the adhesive coating A is absent in the region of the tear strip 40, the facing portions of the wrapping material do not adhere to one-another along the line of the tear strip. Removal of the strip to open the package can be initiated at the exposed end edges 31. The end part 43 of the strip 40 in the end portion 41 of the material which is outermost when the two end portions are folded down as shown in Figure 7 can be separated from the end part 44 thereof which is innermost, and the strip 40 can be torn away progressively as indicated by the arrow C in Figure 7, along the length of the rows of slits 39 all around the package.

Depending on the thickness and strength of the materials used and the ease with which it is desired that the wrapping material may be disrupted as herein described, it will be understood that in some cases the slits 39 might be formed only in the corrugated layer 35, or only in the base layer 34.

Further, although it is particularly convenient to form the lines of weakness as such rows of spaced slits 39 which extend through one or both layers, other arrangements are possible. For example, one of the layers may be formed with a longitudinally continuous slit extending partially or entirely through the thickness thereof. In another arrangement, instead of slits, one or both layers may be formed with rows of perforations. Such different forms of lines of weakness may be used in different combinations as required.

Figure 8 shows a modified package formed by using two sheets of the Figure 5 embodiment of wrapping material although the other embodiments may also be used in a similar manner. The two sheets 32, 32' are identical to one another and are each formed as illustrated in Figure 5, and each includes a central tear strip 40. End portions 45, 45' of each sheet are brought into contact as shown in Figure 8, followed by the longitudinal edge portions, to form the package. Separation of the tear strip(s) 40 may be initiated at either end edge 31, 31'. One sheet however may have the tear strip 40 omitted.

Although in the illustrated embodiments described above in relation to Figures 5 to 8 there are two rows of slits 39 arranged to define a tear strip 40, it will be understood that in some cases there may be only a single row of slits (or perforations) within the uncoated strip 36 as the wrapping material can still be disrupted readily along the row.

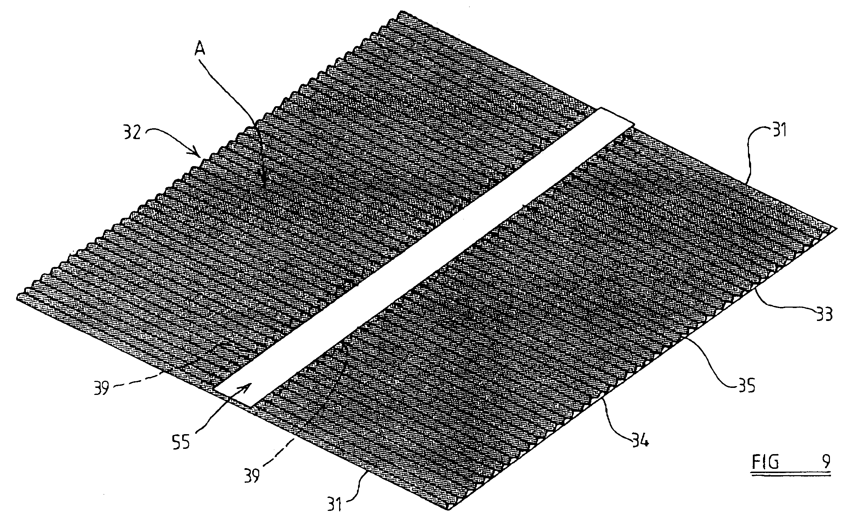

Figure 9 shows a modified version of the material of Figure 5 in which instead of the uncoated strip 36, the coating A extends without interruption across the entire width of the corrugated layer 35 and is covered, between the slits 39, by a masking strip 55. Such masking strip may be formed from a single layer of flat or corrugated flexible material having a coating of cohesive material on one face so as to become firmly attached to the underlying layer 35. However, it is preferably formed form a composite material similar to that which forms the wrapping material itself, including both a flat layer and a corrugated layer having a coating of the cohesive material, and secured to the wrapping material by means of the cohesive coating.

As illustrated, the masking strip may have a width slightly less than the spacing between the lines of slits 39. Alternatively it could be of the same width so that the lines of slits substantially align with the edges of the strip. However, if desired, the strip could be wider than the spacing between the lines of slits, and in such a case the slits may be formed to extend also through the strip.

Instead of covering the coating A with a masking strip 55, it would alternatively be possible to mask the coating by applying a further coating of a substance, such as a grease, graphite or other lubricant, or any other suitable substance that will prevent the coating adhering.

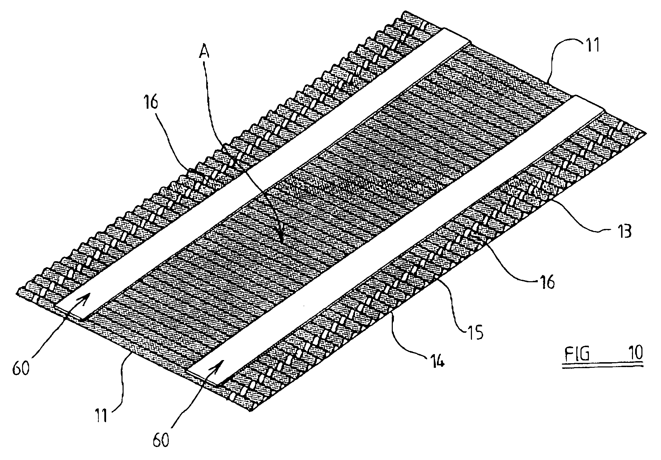

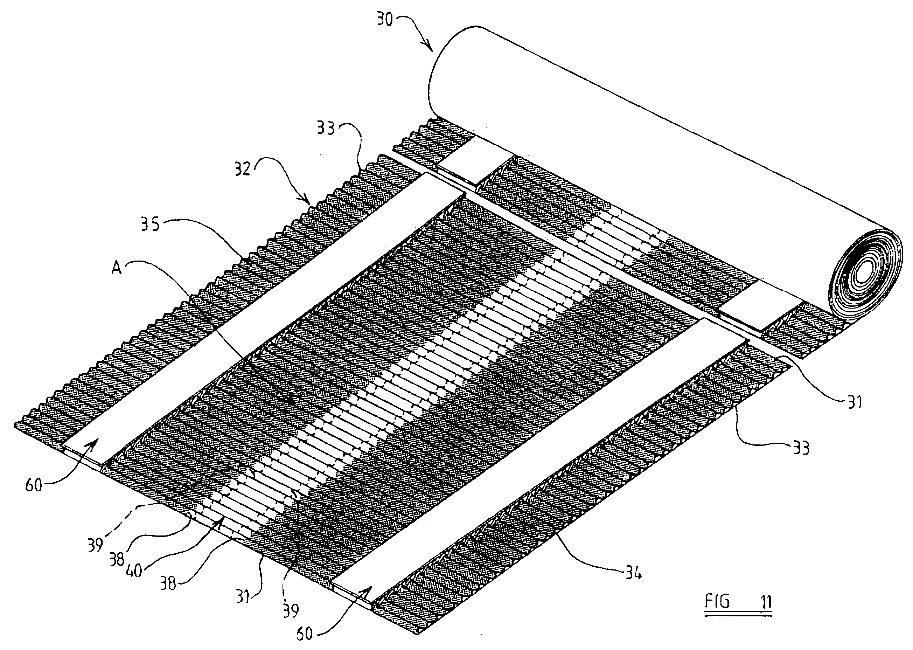

In some cases, it may be required to provide additional reinforcement for the packaged article, so as to protect vulnerable edges thereof, and for this purpose longitudinal strips 60 of reinforcing material may be laid across the corrugations at spacings corresponding to the edges of the article, that is to say inwardly of the gaps 16 in the Figure 1 embodiment, for example as shown in Figure 10, or outwardly of the tear strip 40 of the embodiments of Figures 5 and 9, for example as shown in Figure 11. Such reinforcing strips 60 may be formed from composite material similar to that which forms the wrapping material itself, and be secured to the wrapping material by means of the cohesive coating in the manner described above in relation to the masking strip 55.

If desired, both faces of the reinforcing strip 60 may be coated with the cohesive material so as not to reduce adhesion of the edge portions of the package, but in most cases it is envisaged that this will not be necessary. In the latter case, however, it will be appreciated that when the wrapping material with such reinforcing strips is wrapped around the article A, and the reinforcing strips are brought into engagement, there will be no adhesion in the area where the reinforcing strips are in contact.

The features disclosed in the foregoing description, or the accompanying drawings, expressed in their specific forms or in terms of a means for performing the disclosed function, or a method or process for attaining the disclosed result, may, separately or in any combination of such features, be utilised for realising the invention in diverse forms thereof.

## Claims

1. Wrapping material (12, 12a; 32) of the kind comprising a layer of a corrugated sheet material (15, 35) and a further layer of a flexible sheet material (14, 34) bonded together to form a composite material, the corrugated sheet material (15, 35) having on its exposed face a coating of cohesive adhesive material (A) such that when two portions of the corrugated sheet material are brought into contact they adhere to one-another, wherein at least one line of weakness (16, 16a, 39) is formed in the material to extend along the length of the material in a direction transverse to the corrugations, whereby the material may be torn along said line of weakness to facilitate opening of a package formed from the composite material.

2. Wrapping material according to Claim 1 wherein said line of weakness is formed as a discontinuity (16, 16a) in the layer of corrugated material (15).

3. Wrapping material according to Claim 2 wherein said discontinuity is formed as a gap (16, 16a) in the corrugated layer of the composite material.

4. Wrapping material according to Claim 2 wherein said discontinuity is a score-line extending through part of the thickness of the corrugated material.

5. Wrapping material according to Claim 2 wherein said discontinuity is formed by a line of spaced slits (39) extending though the entire thickness of the corrugated material.

6. Wrapping material according to Claim 2 wherein said discontinuity is formed as a line of perforations formed in the corrugated material.

7. Wrapping material according to Claim 3 wherein at least one line of weakness (19) is formed in said further layer (14) to extend along the gap (16a) in the corrugated layer (15).

8. Wrapping material according to Claim 1 wherein said coating of cohesive material (A) is formed with an interruption in the region of said line of weakness (39).

9. Wrapping material according to Claim 8 wherein said interruption is formed by a physical gap (36) in said coating (A).

10. Wrapping material according to Claim 8 wherein said interruption is provided by masking said coating.

11. Wrapping material (32) of the kind comprising a layer of a corrugated sheet material and a further layer of a flexible sheet material (34) bonded together to form a composite material, the corrugated layer (35) having on its exposed face a coating of cohesive adhesive material (A) such that when two portions of the corrugated layer are brought into contact they adhere to one-another, wherein there is a gap in said coating (A) which forms a strip (36) of the corrugated material (35) that is free of said coating, which strip (36) extends along the length of the material in a direction transverse to the corrugations, and at least one line of weakness (39) is formed in the material in said strip (36) to extend along said strip and thereby to facilitate opening of a package formed from the composite material by tearing of the material along said line of weakness.

12. Wrapping material (32) of the kind comprising a layer of a corrugated sheet material (35) and a further layer of a flexible sheet material (34) bonded together to form a composite material, the corrugated layer (35) having on its exposed face a coating of cohesive adhesive material (A) such that when two portions of the corrugated layer are brought into contact they adhere to one-another, wherein at least one line of weakness (39) is formed in the material to extend along the length of the material in a direction transverse to the corrugations and thereby to facilitate opening of a package formed from the composite material by tearing of the material along said line of weakness, and wherein said coating (A) is masked by a covering (55) which extends along the length of the material in the region of said line of weakness (39) so as to prevent the corrugated layer adhering in the vicinity of the line of weakness.

13. Wrapping material according to Claim 12 wherein said covering comprises a strip (55) of material coated with said cohesive material on one face only so as to adhere to the corrugated layer.

14. Wrapping material according to Claim 13 wherein said covering strip (55) comprises a composite material similar to that from which the wrapping material itself is formed, namely comprising a layer of a corrugated sheet material and a further layer of a flexible sheet material bonded together to form a composite material, the corrugated sheet material having on its exposed face a coating of cohesive adhesive material, and such strips are then secured on to the wrapping material by bringing the face of the corrugated material of the strip that is coated with the cohesive material into contact with the corrugated layer of the wrapping material.

15. Wrapping material according to Claim 12 or Claim 13 wherein two of said lines of weakness (39) are arranged as a pair, spaced apart in the direction of the length of the corrugations, to define between them a tear strip (40), that is readily detachable from the composite material so as to divide it into two separate pieces thereby facilitating removal of the wrapping material from the wrapped article when required.

16. Wrapping material according to Claim 1 wherein additional reinforcement is provided by means of one or more strips (60) of material secured in face-to-face relationship with the corrugated layer (15, 35) and extending in a direction transverse to the corrugations.

17. Wrapping material according to Claim 16 wherein said reinforcement strips (60) are formed from a composite material similar to that from which the wrapping material itself is formed, comprising a layer of a corrugated sheet material and a further layer of a flexible sheet material bonded together to form a composite material, the corrugated sheet material having on its exposed face a coating of cohesive adhesive material, and such strips are then secured on to the wrapping material by bringing the face of the corrugated material of the strip that is coated with the cohesive material into contact with the corrugated layer of the wrapping material.

18. Wrapping material according to any one of the preceding claims wherein said further layer (14, 34) is additionally provided with a line of weakness (16) in the region of the line of weakness (16, 39) in the corrugated layer (15, 35).

19. A method of wrapping articles by using wrapping material in accordance with any one of the preceding claims, comprising the steps of arranging two portions of said material with the corrugated layer in juxtaposition with said article, and bringing said corrugated layers into face-to-face contact around the periphery of the article so as to become adhered to one-another, with said line of weakness extending across the package thus formed and at least partly in a region where the corrugated layers are in contact.
